# EUROPEAN PATENT SPECIFICATION

(11) **EP 1 854 990 B1**
(45) Date of publication and mention of the grant of the patent: **27.05.2015**
(21) Application number: 06714068.1
(22) Date of filing: 20.02.2006
(51) Int. Cl.: F02M 35/12, F02M 35/16, B63H 20/00

(54) **INTERNAL COMBUSTION ENGINE HAVING INTAKE GUIDE DEVICE**
BRENNKRAFTMOTOR MIT SAUGROHRFÜHRUNGSVORRICHTUNG
MOTEUR À COMBUSTION INTERNE AVEC DISPOSITIF DE GUIDAGE D'ADMISSION

(30) Priority: 01.03.2005 JP 2005056626; 01.03.2005 JP 2005056627
(43) Date of publication of application: 14.11.2007
(73) Proprietor: HONDA MOTOR CO., LTD., Minato-ku Tokyo 107-8556 (JP)
(72) Inventor: IKUMA, TOMONORIC, Wako-shi, Saitama, 3510193 (JP); SHIMAZAKI, WATARU, Wako-shi, Saitama, 3510193 (JP); TAKAHASHI, HIROSHI, Wako-shi, Saitama, 3510193 (JP); KASAI, KOUJI, Wako-shi, Saitama, 3510193 (JP)
(74) Representative: Weickmann & Weickmann
(86) International application number: PCT/JP2006/302927
(87) International publication number: WO 2006/092972

(56) References cited:
- EP-A- 0 957 258
- JP-A- 08 093 581
- JP-A- 10 184 470
- JP-A- 2002 219 967
- JP-Y2- 63 033 036
- US-A- 4 998 516
- US-A- 5 035 211
- US-A- 5 489 227
- US-A1- 2002 111 089
- US-A1- 2002 117 138

## Description

### TECHNICAL FIELD

The present invention relates to an internal combustion engine provided with a silencer having a silencing chamber, and a valve device provided with a valve for controlling the flow of intake air. The internal combustion engine is incorporated into an outboard motor, for example.

### BACKGROUND ART

Internal combustion engines provided with an intake unit having a silencing chamber are disclosed in, for example, Patent documents 1 and 2.

The engine disclosed in Patent document 1 is provided with an intake chamber connected to a carburetor by an air duct. The intake chamber is disposed in a space of a ventilation gap between opposite side walls of a fan cover covering an engine body and a carburetor, and an engine cover covering the fan cover, to separate from intake air the spray of sea water and dust contained in intake air taken in through the air inlet of the engine cover. The intake chamber is provided with an inlet opening in a direction opposite a direction in which the air inlet of the engine cover opens.

While it is desirable to provide an internal combustion engine with a silencing chamber of a large volume to reduce intake air noise, there is an upper limit of the volume of an engine compartment that is defined by the engine cover covering the internal combustion engine. Under such a limitation, an intake air silencer having a silencing chamber for an engine disclosed in Patent document 2, with a view to providing as much a volume as possible, is provided with a first intake air silencing chamber connected to the inlet of a carburetor and formed in a space extending along the side surface of a crankcase, and a second intake air silencing chamber connected to the upstream side of the first intake air silencing chamber and formed in a space extending along the front side of the crankcase. In another known intake air silencer, a second intake air silencing chamber is provided with a resonance chamber branching off from a duct.

Patent document 1: JP-U 63-33036 B
Patent document 2: JP 8-93581 A

US 2002/111 089 A1 shows an internal combustion engine in accordance with the preamble of claim 1.

### DISCLOSURE OF THE INVENTION

### PROBLEM TO BE SOLVED BY THE INVENTION

When a silencing chamber is formed in a space covered with an engine cover, an air duct is needed for connecting an intake chamber and a carburetor because a space must be secured first of all inside the engine cover. Therefore, the silencing chamber is extended in a space extending along a side surface of a crankcase on the side of a carburetor and in a space extending along the front side of the crankcase. Consequently, an intake air guide unit for guiding air to the carburetor and having a silencing chamber is large and heavy. Therefore, it is desirable to dispose the intake air guide unit as near to a valve device provided with a valve for controlling the flow of intake air, such as a carburetor, as possible to reduce the size and weight of the intake air guide unit.

The throttle valve of a carburetor is operated by an operating mechanism including a linkage connected to a lever for moving the throttle valve. Therefore, a working space is secured around the lever to facilitate maintenance work for connecting the lever and the operating mechanism and adjusting the opening of the throttle valve.

The present invention has been made in view of such circumstances and it is therefore an object of the present invention to provide a small, lightweight intake air guide unit capable of reducing intake noise and forming a silencing chamber near the body of a valve device provided with a valve for controlling the flow of intake air in a working space for connecting a connecting member of the valve and an operating mechanism.

### MEANS FOR SOLVING THE PROBLEM

The present invention provides an internal combustion engine provided with an air intake system including: an intake air guide unit having a silencer forming a silencing chamber; a valve device including a body connected to the intake air guide unit and having an intake air passage for taking in air that has passed through the intake air guide unit, and a valve placed in the air passage to control the flow of intake air; and an operating mechanism connected to a connecting member attached to the valve to operate the valve: characterized in that the silencer is disposed in a working space for connecting the connecting member and the operating mechanism, and is provided to be set at one of a first position where the silencer covers the connecting member with respect to a predetermined direction in which the intake air passage, the connecting member and the silencer are arranged in that order, and a second position where the silencer is outside the working space.

In this air intake system, the silencer forming the silencing chamber is disposed in the working space for connecting the connecting member and the operating mechanism. The work space can be used for work for connecting the vale and the operating mechanism and adjusting the valve by setting the silencer in the second state where the silencer does not cover the connecting member of the valve device.

The silencer and the silencing chamber form a first silencer and a first silencing chamber, respectively, the first silencing chamber has an intake air inlet opening into the atmosphere, and the first silencer forms an upstream guide unit, and wherein the intake air guide unit includes the upstream guide unit, and a downstream guide unit having a second silencer forming a second silencing chamber on a downstream side of the first silencing chamber and connected to the body, and the upstream guide unit is connected to the downstream guide unit so as to be set at one of the first and the second position.

The working space can be secured by moving only the upstream guide unit to the outside of the working space relative to the upstream guide unit in the intake air guide unit.

The upstream guide unit may be detachably connected to the downstream guide unit.

In a preferred embodiment, an exit passage is connected to the downstream end of the second silencing chamber and to the upstream inlet of the intake passage of the body.

Preferably, the exit passage, the second silencing chamber and the first silencing chamber are arranged in that order from a position near the intake passage of the body in a predetermined direction.

The body and the first silencing chamber may overlap each other with respect to the predetermined direction.

Typically, the predetermined direction is a vertical direction, and the first silencing chamber is above the body.

Preferably, the intake air inlet overlaps the body with respect to the predetermined direction and opens toward the body.

Preferably, the intake air guide unit is provided with a third silencing chamber communicating with the second silencing chamber. Preferably, the third silencing chamber is formed at the same position as the intake air passage with respect to the predetermined direction and branches off from the upstream end of the exit passage. Desirably, the third silencing chamber is at least partly at the same position as the body with respect to the predetermined direction.

In a preferred embodiment, the first silencing chamber, the second silencing chamber and the exit passage are elongate in a direction perpendicular to the predetermined direction, and the third silencing chamber is elongate in the predetermined direction. Preferably, the exit passage has a bottom wall declining toward the third silencing chamber, and the third silencing chamber is provided with a drain hole. Typically, a flame arrester is interposed between the second silencing chamber and the exit passage.

### EFFECT OF THE INVENTION

The present invention has the following effects. Since the silencing chamber can be formed in the space in which the connecting member is disposed, the volume of the silencing chamber can be increased accordingly and the intake noise can be reduced. The work for connecting and adjusting the valve and the operating mechanism can be made possible by setting the silencer in the second state.

When the upstream guide unit capable of being set in either of the first and the second state is formed, the operation for securing the working space can be easily achieved by moving only the upstream guide unit of the intake air guide unit to the outside of the working space.

In the preferred embodiment, the first and the second silencing chamber can be disposed near the carburetor in a compact arrangement, and the first silencing chamber can be formed in a large volume. It is possible to make difficult for foreign matters contained in the intake air to enter through the intake air inlet into the intake air guide passage by opening the intake air inlet downward.

The third silencing chamber further enhances silencing effect. The third silencing chamber can be formed in the space extending in a predetermined direction beside the body because the third silencing chamber is at the same position as the body of the valve device having the intake air passage with respect to a predetermined direction. Thus the third silencing chamber does not protrude or does not greatly protrude in the predetermined direction.

Since the first silencing chamber, the second silencing chamber and the exit passage are elongate in a direction perpendicular to the predetermined direction, and the third silencing chamber is elongate in the predetermined direction, the respective dimensions along the predetermined direction of the first and the second silencing chamber and the exit passage are small, and the width of the third silencing chamber along the direction perpendicular to the predetermined direction is small.

### BRIEF DESCRIPTION OF THE DRAWINGS

Fig. 1 is a right side elevation of an outboard motor provided with an internal combustion engine according to the present invention;
Fig. 2 is a plan view of an essential part of the outboard motor shown in Fig. 1, in which an engine cover is removed;
Fig. 3 is an enlarged view of an essential part shown in Fig. 2;
Fig. 4 is a sectional view of an intake air guide unit included in the internal combustion engine shown in Fig. 1, in which an upstream guide unit is shown in a sectional view taken on the line IVa-IVa in Fig. 6 and a downstream guide unit is shown in a sectional view taken on the line IVb-IVb in Fig. 6;
Fig. 5 is a side elevation of an intake system included in the internal combustion engine taken in the direction of the arrow V in Fig. 2.
Fig. 6 (A) is a view taken in the direction of the arrows on the line VIa-VIa in Fig. 4, and Fig. 6(B) is a view taken in the direction of the arrows on the line VIb-VIb in Fig. 4;
Fig. 7 is a sectional view taken on the line VII-VII in Fig. 6;
Fig. 8 is a sectional view taken on the line VIII-VIII in Fig. 6;
Fig. 9 is a sectional view taken on the line IX-IX in Fig. 4; and
Fig. 10 is a sectional view taken on the line X-X in Fig. 4.

### DESCRIPTION OF REFERENCE SIGNS

1...Outboard motor, 2...Internal combustion chamber, 3...Propulsion unit, 4...Holding device, 5...Cylinder block, 6...Cylinder head, 7...Crankcase, 8...Engine body, 9...Piston, 10...Crankshaft, 11...Connecting rod, 12...Housing, 13...Under case, 14...Fan cover, 15...Air guide chamber, 16...Engine cover, 17...Engine compartment, 18...Fuel tank, 20...Drive shaft, 21...Extension case, 22...Gear case, 23...Gear mechanism, 24...Propeller shaft, 25...Propeller, 26...Bracket, 27...Tilting shaft, 28...Swivel case, 29...Steering arm, 30...Cooling fan, 31... One-way clutch, 32...Recoil starter, 33...Air inlet, 34...Air inlet, 35...Air discharge opening, 40...Air intake system, 41...Plug cap, 42...Exhaust pipe, 43... Combustion chamber, 44... Intake valve, 45...Exhaust valve, 46...Exhaust valve, 47...Exhaust port, 50...Intake air guide unit, 51...Intake air guide passage, 52...Intake air inlet, 53...Intake air outlet, 54, 55 and 56...Silencing chambers, 57...Exit passage, 58, 59 and 60 ... Openings, 61 ... Bottom wall, 62 and 68 ... Top walls, 63 and 64...Side walls, 65...Damping member, 66 and 67...Bosses, 69 and 70...Openings, 71...Sealing member, 72...Drain hole, 73...Bottom wall, 74...Holding part, 75...Groove, 76...Top wall, 77...Main part, 78...Cover, 79...Gas-liquid separating chamber, 80...Carburetor, 81...Body, 82...Intake air passage, 83...Throttle valve, 84...Choke valve, 85...Connecting plate, 86...Insulator, 87...Adjusting screw, 88...Air bend, 91 and 92...Operating mechanism, 93...Clamp, 95...Screen, 96...Frame, 98...Pipe, B1 and B2...Bolts, G1...Upstream guide unit, G2...Downstream guide unit, D...Cover, H...Gap, S1, S2 and S3...Silencers, E...Exit unit, F...Flame arrester, R...Blowby gas carrying part, C1, C3, C3 and C4...Cases, P... orking space

### BEST MODE FOR CARRYING OUT THE INVENTION

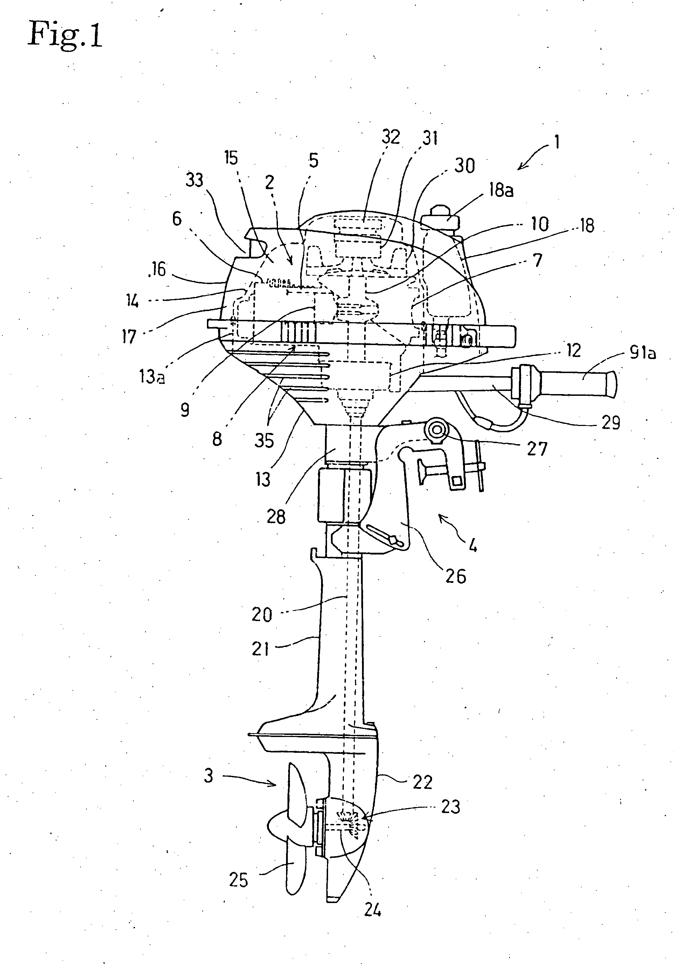

A preferred embodiment of the present invention will be described with reference to Figs. 1 to 10.

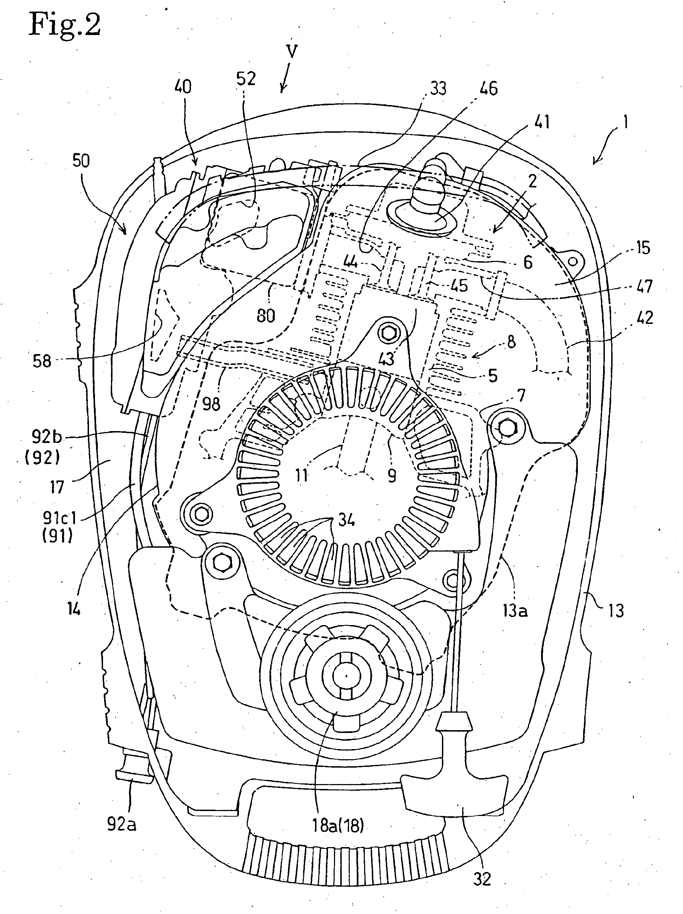

Referring to Figs. 1 and 2, an outboard motor 1 provided with an internal combustion engine 2 according to the present invention, namely, a marine propulsion apparatus, includes the internal combustion engine 2, a propulsion unit 3 driven by the internal combustion engine 2 to generate thrust, and a holding device 4 for holding the outboard motor 1 on a hull, not shown.

The internal combustion engine 2 is a vertical single-cylinder air-cooled four-stroke internal combustion engine. The internal combustion engine 2 has a crankshaft 10 having a vertical center axis. The internal combustion engine 2 is disposed with the axis of its cylinder horizontally extended. The internal combustion engine 2 is disposed with its cylinder axis extending horizontally and has an engine body 8 including a cylinder block 5 in which a piston 9 reciprocates, a cylinder head 6 joined to the rear end of the cylinder block 5, and a crankcase 7 formed on the front end of the cylinder block 5. The piston 9 driven by a combustion gas produced in a combustion chamber (Fig. 2) drives a crankshaft 10 rotatably supported on the engine body 8 for rotation through a connecting rod 11.

In this specification and appended claims, the terms, vertical, longitudinal and lateral are used for indicating directions, positions and such with respect to the hull of a ship on which the outboard motor 1 is mounted. When the outboard motor 1 is in a standard position, the center axis of the crankshaft 10 is vertical. The terms, upstream and downstream are used for indicating directions, positions and such with respect to a direction in which intake air flows.

A housing 12 of a centrifugal clutch is connected to a lower part of the engine body 8, and an under case 13 is connected to the housing 12 of the centrifugal clutch. The under case 13 has in an upper end part thereof an inside wall 13a surrounding a lower part of the engine body 8t. The engine body 8 is held in an air intake chamber 15 defined by the inside wall 13a of the under case 13, and a fan cover 14, namely, inside cover, joined to the inside wall 13a and covering an upper part of the engine body 8. An engine cover 16 is joined to an upper end part of the under case 13 and covers the fan cover 14 and a fuel tank 18 disposed in front of the fan cover 14. Most part of the internal combustion engine 2 including the engine body 8, the fan cover 14, most part of the fuel tank 18 excluding a cap 18a protruding outside from the engine cover 16, and the housing 12 are held in an engine compartment 17 defined by the under case 13 and the engine cover 16.

An extension case 21 holding a drive shaft 20 is joined to a lower end part of the under case 13. A gear case 22 holding a transmission mechanism for transmitting the rotation of the drive shaft 20 to a propeller 25 is joined to a lower end part of the extension case 21.

The centrifugal clutch is engaged when the crankshaft 10 rotates at a rotational speed exceeding an idling speed. The crankshaft 10 is connected to the drive shaft 20 by the centrifugal clutch. The drive shaft 20 aligned with the crankshaft 10 extends vertically through the extension case 21 into the gear case 22. The drive shaft 20 is interlocked with a propeller shaft 24 by a gear mechanism 23 in the gear case 22. The power of the internal combustion engine 2 is transmitted from the crankshaft 10 through the centrifugal clutch, the drive shaft 20, the gear mechanism 23, and the propeller shaft 24 to the propeller 25 to rotate the propeller 25. The centrifugal clutch, the drive shaft 20, the gear mechanism 23, the propeller shaft 24 and the propeller 25 constitute the propulsion unit 3.

The holding device 4 includes a bracket 26 detachably attached to the hull, and a swivel case 28 supported for turning in a vertical plane on the bracket 26 by a tilting shaft 27. The extension case 21 is supported for turning in a horizontal plane by the swivel case 28.

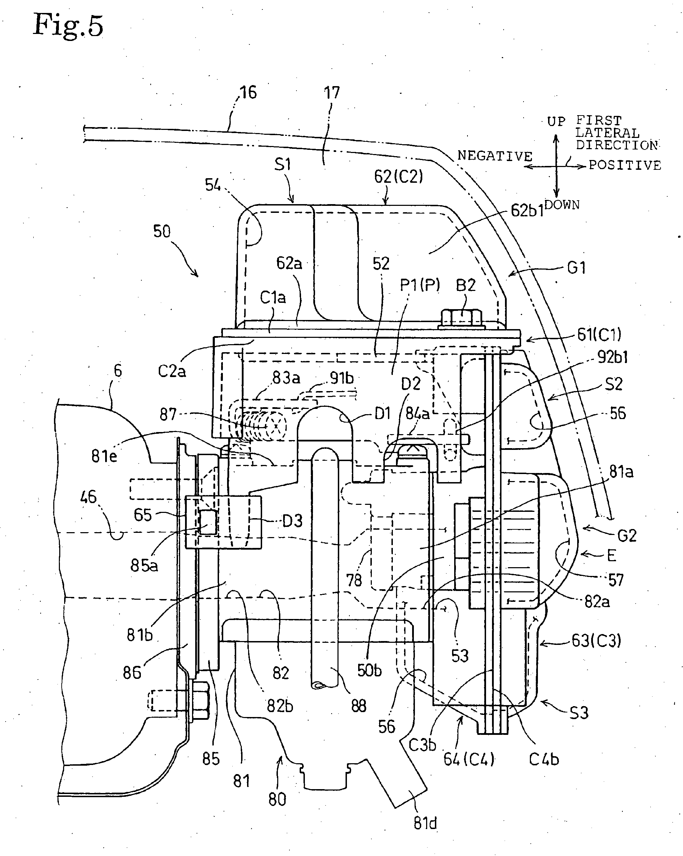

A steering arm 29 is connected to the housing 12. The steering arm 29 can turn in a plane perpendicular to the center axis of the crankshaft 10. The steering arm 29 is operated to turn the outboard motor 1 in a horizontal plane on the swivel case 28 for steering and setting the outboard motor 1 for either of forward propulsion and reverse propulsion. A throttle grip 91a for operating the throttle valve 83 (Fig. 5) of a carburetor 80 is mounted on a free end part of the steering arm 29. The throttle grip 91a is operated to control the output of the outboard motor 1.

A cooling fan 30 and a one-way clutch 31 combined with a recoil starter 32 are mounted on an upper end portion of the crankshaft 10 projecting upward in the fan cover 14 from the engine body 8. An air inlet 33 is formed in an upper part of the engine cover 16 so as to open rearward. The air inlet 33 opens in the rear wall, the right side wall and the left side wall of the engine cover 16. The fan cover 14 has an upper part provided with an air inlet 34 (Fig. 2) including plural radial openings. Air flowing through the air inlet 33 into the engine compartment 17 flows through the air inlet 34 and serves as cooling air for cooling the engine body 8. The rotating cooling fan 30 sucks part of the air that has flowed through the air inlet 33 into the engine compartment 17 through the air inlet 34 into an air guide chamber 15. The air taken into the air guide chamber 15 cools the engine body 8 and an exhaust pipe 42 and is discharged outside the outboard motor 1 through air discharge openings 35 formed in a lower part of the under case 13.

Referring to Fig. 2, the internal combustion engine 2 is provided with an air intake system 40 for carrying intake air or an air-fuel mixture into a combustion chamber 43 formed in the cylinder head 6. The internal combustion engine 2 is provided with an exhaust system including the exhaust pipe 42 for carrying a combustion gas produced by the combustion of the air-fuel mixture caused by ignition by a spark plug attached to the cylinder head 6 as an exhaust gas to the outside of the outboard motor 1. In Fig. 2 is shown a plug cap 41 put on the spark plug to supply ignition current to the spark plug.

More concretely, the cylinder head 6 is provided with an intake valve 44, an exhaust valve 45, an intake port 46 and an exhaust port 47. The intake valve 44 and the exhaust valve 45 are operated by a valve train, not shown, in synchronism with the rotation of the crankshaft 10 to open and close the intake valve 44 and the exhaust valve 45. Intake air taken in by the air intake system 40 is sucked through the intake port 46 into the combustion chamber 43. The exhaust gas is discharged through the exhaust port 47 into the exhaust pipe 42.

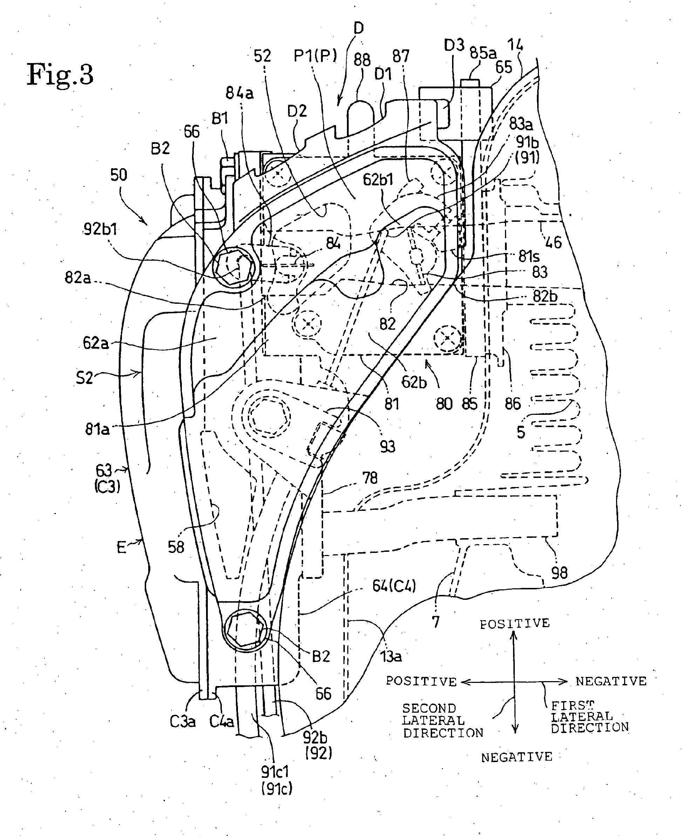

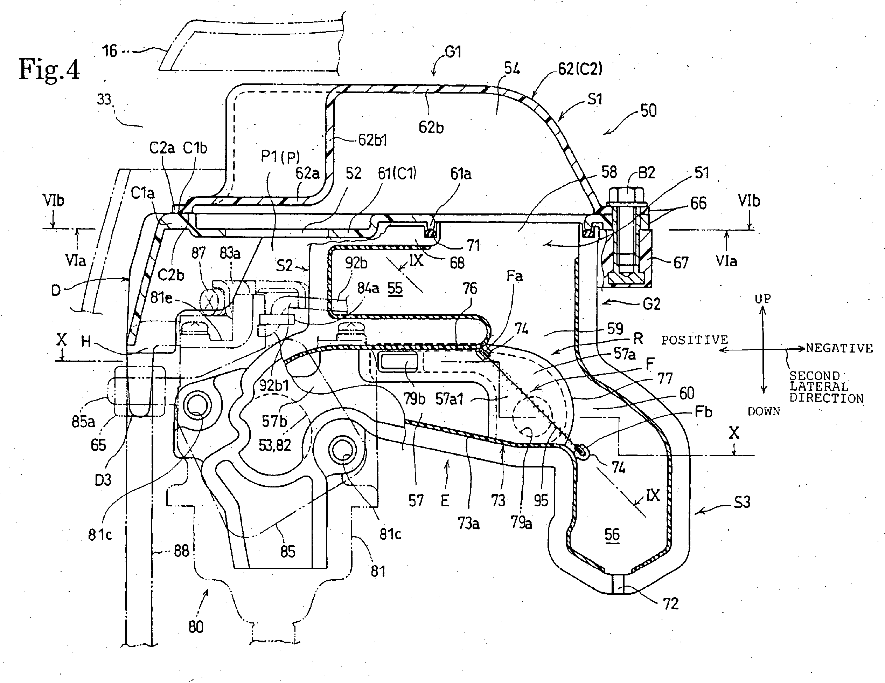

Referring also to Figs. 3 to 5, part of the air that has flowed through the air inlet 33 into the engine compartment 17 is taken by the air intake system 40 to use the same as combustion air. As best shown in Fig. 4, the air intake system 40 has an intake air guide unit 50 defining an intake air inlet 52 and an intake air outlet 53 and defining an intake air guide passage 51. The intake air inlet 52 and the intake air outlet 53 open into the engine compartment 17. The air intake system 40 is provided with a carburetor 80, namely, a valve device or a throttle valve device. The carburetor 80 has a carburetor body 81 defining an intake air passage 82 through which intake air that has passed through the intake air guide passage 51 flows, a throttle valve 83 (Fig. 3) placed in the intake air passage 82 to control the flow of intake air, and a choke valve 84 (Fig. 3). The air intake system 40 is provided with operating mechanisms 91 and 92 connected to the throttle valve 83 and the choke valve 84 to control the throttle valve 83 and the choke valve 84, respectively.

The body 81 of the carburetor 80 has a downstream end part 81b (Fig. 5) connected through a connecting plate 85 and an insulator 86 to the cylinder head 6, an upstream end part 81a fastened to a downstream end part 50b (Fig. 5) of the intake air guide unit 50 with bolts B1 (Fig. 3) passed through openings 81c (Fig. 4). Thus an opening 82b at the downstream end of the intake air passage 82 is connected to the inlet of the intake port 46, and an upstream opening 82a at the upstream end of the intake air passage 82 is connected to the outlet 53 of the intake air guide passage 51. The intake air guide passage 51 and the intake air passage 82 form an intake passage for carrying the intake air through the intake port 46 into the combustion chamber 43.

The throttle valve 83 controls the output of the internal combustion engine 2 through the regulation of the flow of intake air dominating the flow of air-fuel mixture. The choke valve 84 controls the air-fuel ratio of the air-fuel mixture through the regulation of the flow of intake air. The operating mechanism 91 operates the throttle valve 83 for opening and closing. The operating mechanism 92 operates the choke valve 84 for opening and closing.

The throttle valve 83 has a valve shaft to which is connected to a lever 83a, namely, a connecting member, placed on the top surface 81e of the body 81. The lever 83a is connected to the throttle valve operating mechanism 91. An adjusting screw 87, namely, an adjusting means for adjusting the opening of the throttle valve 83, is disposed between the throttle valve 83 and the body 81. The adjusting screw 87 is engaged in a threaded hole of the lever 83a and the tip of the screw 87 is adapted to be brought into abutment with a stopper 81s on the body 81. The adjusting screw 87 is turned to adjust the distance between the lever 83a and the stopper 81s. Thus the opening of the throttle valve 83 for the idling operation can be adjusted.

The throttle valve operating mechanism 91 includes the throttle grip 91a (Fig. 1) and an operating force transmitting mechanism connected to the throttle grip 91a and the throttle valve 83 to transmit an operating force applied to the throttle grip 91a to the throttle valve 83. The operating force transmitting mechanism is disposed directly above the body 81. The operating force transmitting mechanism has a link 91b (Fig. 3) connected to the lever 83a of the throttle valve 83, and a cable 91c (Fig. 3) for transmitting an operating force applied to the throttle grip 91a to the link 91b. The cable 91c extends in the engine compartment 17 between the fan cover 14 and the engine cover 16. The cable 91c has an inner cable, not shown, connected to the link 91b, and an outer cable 91c1 sheathing the inner cable. The outer cable 91c is held fixedly on the fan cover 14 by a clamp 93.

The choke valve 84 has a valve shaft connected to a lever 84a, namely, a connecting member, placed on the top surface 81e of the body 81. The choke valve operating mechanism 92 is connected to the lever 84a. The choke valve operating mechanism 92 includes a choke knob 92a (Fig. 2), and an operating force transmitting mechanism connected to the choke valve 84 and the choke knob 92a to transmit an operating force applied to the choke knob 92a to the choke valve 84. The operating force transmitting mechanism has a rod 92b with one end portion 92b1 disposed directly above the body 81 as shown in Fig. 4 and connected to the lever 83a, and the other end portion connected to the knob 92a. ,

Referring to Figs. 2 to 6, particularly to Fig. 4, the intake air guide unit 50 is disposed together with the carburetor 80 in the engine compartment 17 in a space outside the inside wall 13a and the fan cover 14. The intake air guide unit 50 is formed by detachably joining together an upstream guide unit G1 and a downstream guide unit G2 with a pair of bolts B2, namely, fastening means. The downstream guide unit G2 is fastened to the body 81 with the bolts B2. The downstream guide unit G2 and the upstream guide unit G1 are stacked upward in that order from the side of the intake air passage 82.

The intake air guide unit 50 has a cover D. The cover D extends vertically so as to surround the intake air inlet 52 together with the fan cover 14 and the downstream guide unit G2. The cover D cooperates with the body 81 of the carburetor 80 to define therebetween a gap H (Fig. 4) through which air flows from the engine compartment 17 toward the intake air inlet 52. The intake air guide unit 50 has silencers S1, S2 and S3 respectively having silencing chambers 54, 55 and 56 for reducing sounds generated by the flow of intake air and operation noises including an intake noise generated by the internal combustion engine 2 and propagated through the intake air passage. The intake air guide unit 50 also has an exit unit E forming an exit passage 57 for carrying air from the silencers S1, S2 and S3 to the carburetor 80, a flame arrester F for preventing flashback from the carburetor 80 to the intake air inlet 52, and a blowby gas carrying part R for carrying blowby gas produced in the engine body 8 to the intake system.

Referring to Figs. 3 to 6, the silencers S1, S2 and S3 are the first silencer S1 having the first silencing chamber 54 having the intake air inlet 52, the second silencer S2 having the second silencing chamber 55 communicating with the first silencing chamber 54 by way of a first intermediate opening 58, and the third silencer S3 having the third silencing chamber 56 branching off from an upstream end part 57a of the exit passage 57 and extending at substantially the same height position as the intake air outlet 53 or the intake air passage 82. The first silencing chamber 54, the second silencing chamber 55 and the third silencing chamber 56 are expansion chambers.

The exit passage 57 is on the downstream side of the second silencing chamber 55 and communicates with the second silencing chamber 55 by means of a second intermediate opening 59. The intake air outlet 53 of the exit passage 57 is connected to the upstream opening 82a of the intake air passage 82. The intake air guide passage 51 includes the first silencing chamber 54, the second silencing chamber 55, the third silencing chamber 56, the exit passage 57, the first intermediate opening 58 and the second intermediate opening 59.

The exit unit E, the second silencer S2 and the first silencer S2, namely, the exit passage 57, the second silencing chamber 55 and the first silencing chamber 54, are stacked upward in that order from a position near the intake air passage 82 or the intake air outlet 53. Thus the exit unit E, the second silencer S2 and the first silencer S2, namely, the exit passage 57, the second silencing chamber 55 and the first silencing chamber 54 overlap each other as viewed from above. Such a condition will be referred to as "overlap each other in a horizontal plane". The first silencer S1 is above the body 81 and overlaps the body 81 in a horizontal plane.

As best shown in Fig. 4, the upstream guide unit G1 has the cover D and the first silencer S1. The downstream guide unit G2 has the second silencer S2, the third silencer S3, the exit unit E, the flame arrester F and the blowby gas carrying part R. The upstream guide unit G1 includes a first case C1 provided with a flange C1a having a joint surface C1b, and a second case C2 provided with a flange C2a having a joint surface C2b. The first case C1 and the second case C2 are made of a synthetic resin and are joined together in an airtight fashion. The joint surfaces C1b and C2b are contained in a plane perpendicular to the vertical direction and are welded together. The first case C1 forms the cover D and the bottom wall 61 of the first silencer S1. The second case C2 forms the top wall 62 of the first silencer S1. The first silencing chamber 54 has a vertical width, namely, a vertical dimension along the vertical direction, a first lateral width, namely, a first lateral dimension along a first lateral direction perpendicular to the vertical direction, and a second lateral width, namely, a second lateral dimension along a second lateral direction perpendicular to the first lateral direction. The vertical width is smaller than the first and the second lateral width. Thus the first silencing chamber 54 has a large volume and the small vertical width.

As obvious from Fig. 3, the cover D included in the first silencer S1 is disposed between the fan cover 14 and the second silencer S2 with respect to the first lateral direction. The cover D extends over the intake air inlet 52 on the side of the air inlet 33 opening in the second lateral direction. The cover D is provided with an air bend 88 (Fig. 3), which is a part of the carburetor 80, and recesses D1 and D2 for avoiding interference between the cover D and the body 81. Thus the cover D can be disposed close to the body 81, and hence the cover D and the upstream guide unit G1 are small and of lightweight.

The entire intake air inlet 52 is superposed on the body 81 when viewed from above as shown in Fig. 2. The intake air inlet 52 is formed in a space P1 extending between the body 81 and the first silencer S1 with respect to the vertical direction. The space P1 is surrounded by the cover D, the fan cover 14 and the second silencer S2 with respect to lateral directions perpendicular to the vertical direction and opens toward the top surface 81e of the body 81.

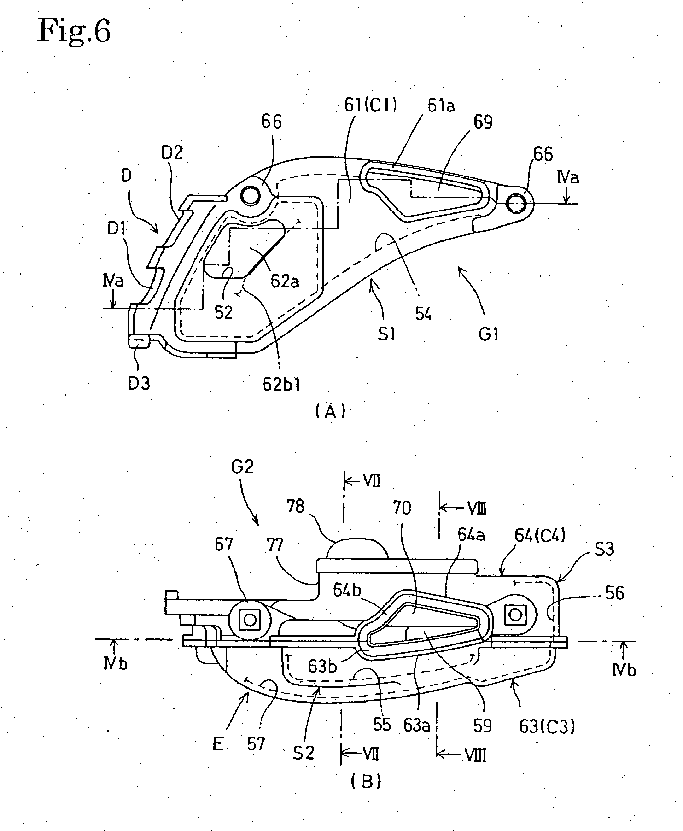

The cover D has a connecting part D3 (Figs. 4 and 5) . The connecting part D3 is connected to a connecting part 85a of a connecting plate 85 on the side of a downstream end part 81b on the downstream side of bosses 66 (Fig. 6) formed on the upstream end part 81a of the body 81 through a damping member 63, namely, an elastic member. Thus the upstream guide unit G1 is supported at three points by the two bosses 66 and the connecting part D3. Thus the upstream guide unit G1 is restrained from vibrating when the internal combustion engine 2 operates.

The top wall 62 has a lower part 62a (Fig. 4) overlapping more than half the intake air inlet 52 when viewed from above, and a protruding part 62b protruding upward from the lower part 62a. The intake air inlet 52 is between the air inlet 33 and a rising portion 62b1 of the protruding part 62b rising from the lower part 62a, in plan view. The rising portion 62b1 deflects a part of air that flows through the air inlet 33 toward the air inlet 34, toward the cover D and therefore toward the gap H.

The downstream guide unit G2 includes a first case C3 provided with a flange C3a having a joint surface C3b, and a second case C4 provided with a flange C4a having a joint surface C4b. The first case C3 and the second case C4 are made of a synthetic resin and are joined together in an airtight fashion. The joint surfaces C3b and C4b are contained in a plane perpendicular to the first lateral direction and are welded together. The first case C3 forms the second silencer S2, the third silencer S3, the exit unit E, and a first side wall 63 provided with the first intermediate opening 58 and the second intermediate opening 59. The second case C4 forms the second silencer S2, the third silencer S3, the exit unit E, and a second side wall 64 provided with the first intermediate opening 58 and the second intermediate opening 59. The second side wall 64 forms the intake air outlet 53.

The second side wall 64 is an inner side wall nearer to the body 81 than the first side wall 63 with respect to the positive first lateral direction in which the upstream opening 82a of the intake air passage 82 opens. The first side wall 63 is an outer side wall remote from the body 81. The second side wall 64 is provided in its upper part with two bosses 66 respectively provided with threaded holes. The bolts B2 passed through the two bosses 66 adjoining the flanges C1a and C2a of the cases C1 and C2 of the upstream guide unit G1 are screwed into the threaded holes of the bosses 67.

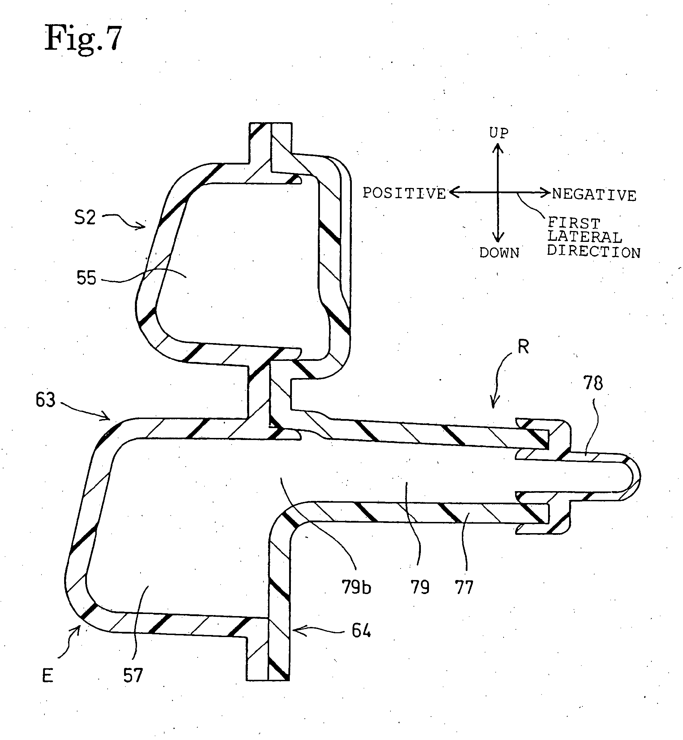

The first silencing chamber 54 and the second silencing chamber 55 (or the first silencer S1 and the second silencer S2) are disposed on the side of the upstream opening 82a of the intake air passage 82 with respect to the body 81. The second silencing chamber 55 (or the second silencer S2) substantially overlaps the exit passage 57 excluding a downstream end part 57b when viewed from above. Referring to Fig. 7, the respective vertical widths and the respective lateral widths along the first lateral direction of the second silencing chamber 55 and the exit passage 57 are approximately equal to each other, respectively. The respective maximum vertical widths of the second silencing chamber 55 and the exit passage 57 are smaller than the maximum vertical width of the first silencing chamber 54.

The bottom wall 61 of the first silencer S1 and the top wall 68 of the second silencer S2 are partition walls separating the first silencer S1 and the second silencer S2 from each other and are disposed so as to intersect an imaginary plane perpendicular to the vertical direction or as close to the imaginary plane as possible. The intake air inlet 52 and the first intermediate opening 58 are contained in the imaginary plane.

Referring to Figs. 3, 4, 6 and 8, the first intermediate opening 58 is formed such that the first intermediate opening 58 does not overlap the intake air inlet 52 in a horizontal plane and partly overlap the second intermediate opening 59 and the upstream end part 57a when viewed from above. An opening 70 (Fig. 6B) is formed in the downstream guide unit G2 by a pair of mating cutouts in the first side wall 63 and the second side wall 64. The first intermediate opening 58 is formed by joining an opening 69 (Fig. 6A) formed in the bottom wall 61, and the opening 70.

Respective peripheral parts 63a and 64a (Fig. 6B) of the first side wall 63 and the second side wall 64 defining the opening 70 are provided with grooves 63b and 64b, respectively. A sealing member 71 is fitted in the grooves 63b and 64b. A peripheral ridge 61a defining the opening 69 presses the sealing member 71 fitted in the grooves 63b and 64b to seal the first intermediate opening 58 and the second intermediate opening 59.

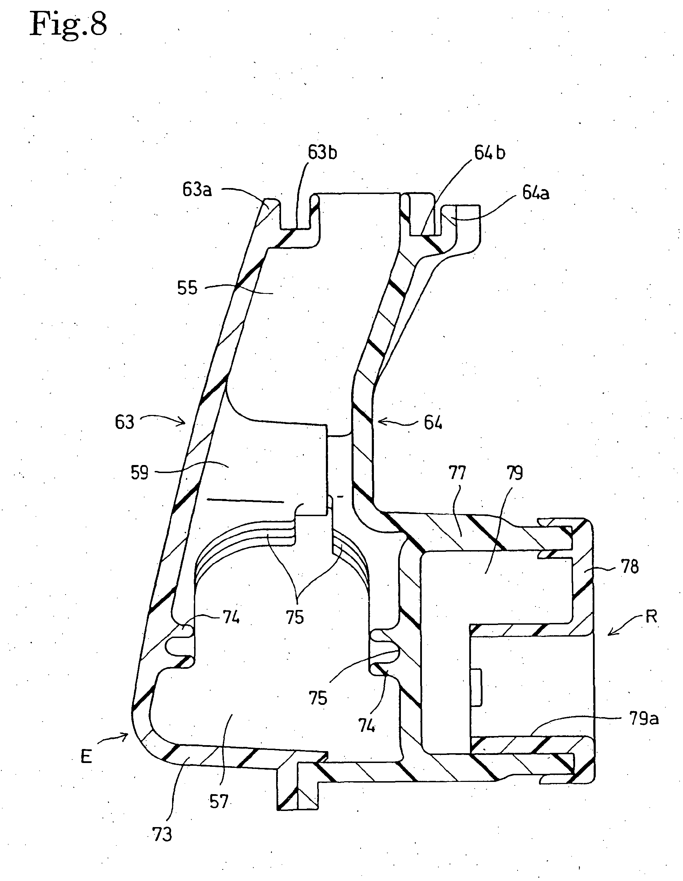

Referring to Figs. 4 and 8, in the upstream end part 47a of the exit passage 57, the second intermediate opening 59 is formed at a position near the second silencing chamber 55 with respect to the vertical direction, and the opening 60 of the third silencing chamber 56 is formed at a position opposite the intake air outlet 53 with respect to a second lateral direction. As shown also in Fig. 5, the third silencer S3 and the third silencing chamber 56 extending below the opening 60 are at least partly at the same height position as the body 81 with respect to the vertical direction. In this embodiment, the third silencer S3 and the third silencing chamber 56 are at a level higher than that of a lower end part 81d of the body 81. The third silencing chamber 56 protrudes beyond the first silencing chamber 54 and the second silencing chamber 55 in the second lateral direction. The third silencing chamber 56 can be formed in a large volume in a space extending in the second lateral direction. The bottom of the third silencer S3 is provided with a drain hole 72, namely, a through hole, for draining water that has flowed together with intake air into the intake air guide passage 51 and has flowed into the third silencing chamber 56 from the intake air guide unit 50.

The bottom wall 73 of the exit passage 57 (or the exit unit E) has an inclined part 73a gradually declining from the intake air outlet 53 toward the opening 60 of the third silencing chamber 56.

The first silencing chamber 54, the second silencing chamber 55 and the exit passage 57 are elongate in the second lateral direction. The third silencing chamber 56 is vertically elongate.

As shown in Figs. 3 and 5, the first silencing chamber 54 is directly above the carburetor 80, and the second silencing chamber 55 and the third silencing chamber 56 are on the side of the positive first lateral direction. Thus the silencing chambers 54 to 56 are disposed at a position coinciding with the carburetor 80 as viewed from above and at positions on one side of the carburetor 80 with respect to the direction perpendicular to the vertical direction.

Referring to Figs. 3 to 5, the levers 83a and 84a, the link 91b, an end part of the rod 92b and the adjusting screw 87 are arranged on the top surface 81e (Fig. 4) of the body 81 opposite the first silencer S1 with respect to the vertical direction and overlap the first silencer S1 as viewed from above. When the intake air guide unit 50 is joined to the body 81, the first silencer S1 extends above the levers 83a and 84a, the link 91b, the end part of the rod 92b and the adjusting screw 87. As shown in Fig. 3, the cable 91c and the rod 92b extend forward through a gap between the fan cover 14 and the second silencer S2 with respect to the first lateral direction and above the third silencer S3 in a front part of the space P1.

A space extending over the top surface 81e including the space P1 is a working space P for connecting the levers 83a and 84a and the link 91b and the rod 92b and for turning the adjusting screw 87 to adjust the opening of the throttle valve 83. In a state where the intake air guide unit 50 is joined to the body 81, the first silencer S1 is in the working space P, and the intake air passage 82, the levers 83a and 84a, the adjusting screw 87 and the first silencer S1 are arranged vertically in that order. In this state, the first silencer S1 is at a first position for covering from above the levers 83a and 84a, the link 91b, the end part 92b of the rod 92b and the adjusting screw 87.

The upstream guide unit G1 is separated from the downstream guide unit G2 joined to the body 81 by removing the bolts B2 for the maintenance of the carburetor 80. In this state, the first silencer S1 is at a second position and not in the working space P and not covering the levers 83a and 84a, the link 91b, the end part 92b1 and the adjusting screw 87 from above. When the first silencer S1 is at the second position, the working space P is opened to facilitate work for connecting the levers 83a and 84a and the link 91b or the rod 92b and work for operating the adjusting screws 87.

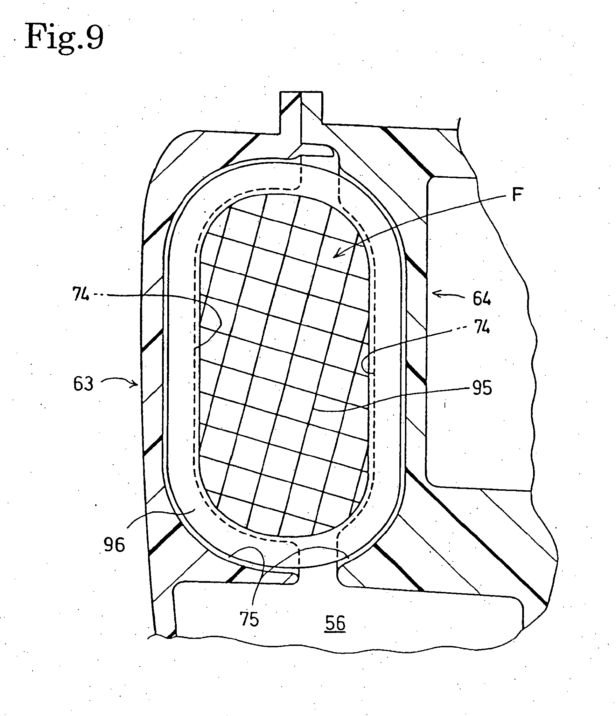

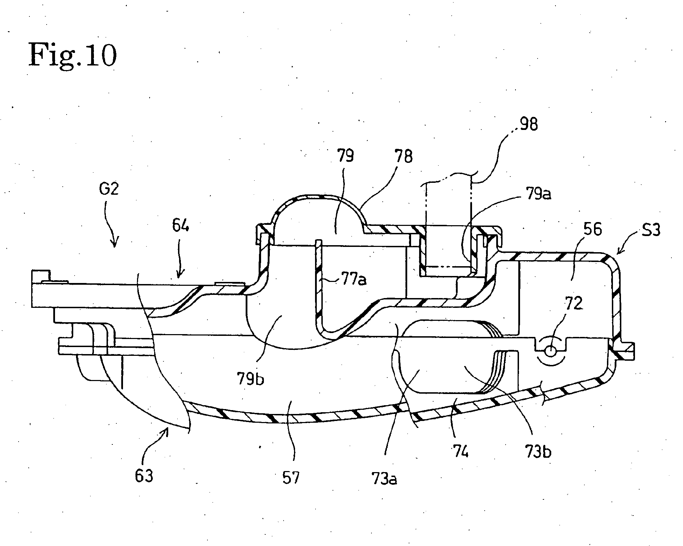

Referring to Figs. 4 and 9, the flame arrester F is disposed in the upstream end part 57a of the exit passage 57 on the downstream side of the first and second silencing chambers 54 and 55, with its upper end portion Fa projecting into the second intermediate opening 59 and its lower end portion Fb projecting through the opening 60 into the third silencing chamber 56. The flame arrester F includes a screen 95, namely, a metal net, and an annular frame 96 to which a peripheral part of the screen 95 is fixed. The frame 96 is shown in Fig. 9. Referring to Figs. 8 and 10, a holding parts 74 are formed in the upstream end part 57a on a passage wall formed by the first and second side walls 63 and 64. The holding parts 74 are formed by recessing the first side wall 63 and the second side wall 64, and a groove 75 is formed in each holding part 74. The frame 96 is fitted in the groove 75. As show in Fig 4, the flame arrester F is held in the upstream end part 57a so as to extend obliquely downward from the top wall 76 of the exit passage 57 toward the third silencing chamber 56.

The flame arrester F is disposed in an expanded part 57a1 having a large passage area to compensate for a reduction in the passage area of the exit passage 57 by the flame arrester F. The expanded part 57a1 is formed in a portion 73b including the inclined part 73a of the bottom wall 73. The flame arrester F overlaps the inclined part 73a and the second intermediate opening 59 when viewed from above. Since the flame arrester F is inclined, the passage area of the expanded part 57a1 changes continuously, whereby the pressure loss of the intake air is reduced and the reduction of the flow of intake air can be suppressed.

Referring to Figs. 3, 4, 8 and 10, in the downstream guide unit G2, the blowby gas carrying part R (Fig. 4) formed in the second side wall 64 near the engine body 8 with respect to the first lateral direction includes a main part 77 forming a hollow of the second side wall 64 and a synthetic resin cover 78 (Fig. 10) welded to the main part 77. The main part 77, the cover 78 and a partition wall 77a formed in the main part 77a define a labyrinthine gas-liquid separating chamber 79. The gas-liquid separating chamber 79 is provided with an outlet 79b and an inlet 79a formed in the cover 78 at a position below the outlet 79b. A pipe 98 (Figs. 2 and 3) has one end connected to the crankcase 7 (Fig. 1) formed on the cylinder block 5 and the other end connected to the inlet 79a. A dry blowby gas produced by separating oil from the blowby gas flows through the outlet 79b into the exit passage 57 and is carried by intake air to the combustion chamber 43.

The operation and effect of the internal combustion engine in the preferred embodiment will be described.

The first silencer S1 of the upstream guide unit G1 of the intake air guide unit 50 is disposed in the working space P for connecting the respective levers 83a and 84a of the throttle valve 83 and the choke valve 84 to the link 91b and the rod 92b of the operating mechanisms 91 and 92 and for operating the adjusting screw 87. The first silencer S1 is at the first position to cover the levers 83a and 84a and the adjusting screw 87 with respect to the vertical direction in which the intake air passage 82, the levers 83a and 84a, the adjusting screw 87 and the first silencer S1 are arranged in that order. The first silencer S1 of the upstream guide unit G1 is at the second position when the upstream guide unit G1 is separated from the downstream guide unit G2 by removing the bolts B2. In this state, the first silencer S1 is not in the working space P.

The first silencer S1 forming the first silencing chamber 54 is disposed in the working space P for connecting the levers 83a and 84a to the operating mechanisms 91 and 92 and for operating the adjusting screw 87 in the air intake system 40. Therefore, the first silencing chamber 54 can be formed in a large volume and intake noise can be reduced. When the first silencer S1 is at the second position relative to the carburetor 80 and not covering the levers 83a and 84a and the adjusting screw 87, the working space P facilitates work for connecting the respective levers 83a and 84a of the throttle valve 83 and the choke valve 84 to the operating mechanisms 91 and 92 and work for operating the adjusting screw 87.

The intake air guide unit 50 includes the upstream guide unit G1 having the first silencer S1 forming the first silencing chamber 54 having the intake air inlet 52, and the downstream guide unit G2 having the second silencer S2 forming the second silencing chamber 55 and joined to the body 81 of the carburetor 80. The upstream guide unit G1 is detachably joined to the downstream guide unit G2 such that the upstream guide unit G1 can be placed in either of the first and the second position. The working space P in the intake air guide unit 50 can be opened by separating the upstream guide unit G1 from the downstream guide unit G2 and moving the upstream guide unit G1 outside the working space P. The working space P can be easily opened simply by moving only the upstream guide unit G1 of the intake air guide unit 50 to the outside of the working space P.

The intake air guide passage 51 includes the first silencing chamber 54 provided with the intake air inlet 52, the second silencing chamber 55 communicating with the first silencing chamber 54 by means of the first intermediate opening 58, and the exit passage 57 communicating with the second silencing chamber 55 by means of the second intermediate opening 59 and provided with the intake air outlet 53 connected to the upstream opening 82a of the intake air passage 82. The exit passage 57, the second silencing chamber 55 and the first silencing chamber 54 are arranged one on top of another in that order from the side of the intake air passage 82. The body 81 and the first silencing chamber 54 overlap each other when viewed from above. Therefore, the first silencing chamber 54 and the second silencing chamber 55 can be disposed near the carburetor 80 and can be compactly arranged. Consequently, the intake guide unit 50 can be formed in small, lightweight construction. Since the first silencing chamber 54 is formed in the working space P extending over the body 81, the first silencing chamber 54 and the second silencing chamber 55 can be formed and the first silencing chamber 54 can be formed in a large volume to reduce intake noise.

The first silencing chamber 54 extends over the body 81, and the intake air inlet 52 overlaps the body 81 when viewed vertically and opens toward the body 81. Thus the intake air inlet 52 opens downward and faces the body 81. Therefore, the flow of foreign matters contained in the intake air, such as water, for example, splashes of sea water and rain, and dust through the intake air inlet 52 into the intake air guide passage 51 can be suppressed.

The intake air guide passage 51 has the third silencing chamber 56 at the same height level as the intake air passage 82 with respect to the vertical direction and branching off from the upstream end part 57a of the exit passage 57, and the third silencing chamber 56 is at least partly at the same height level as the body 81 with respect to the vertical direction. Therefore, the intake air guide passage 51 includes the third silencing chamber 56 in addition to the first and second silencing chambers 54 and 55. The three silencing chambers 54, 55 and 56 effectively reduce intake noise. Since the third silencing chamber 56 is at the same height level as the body 81 of the carburetor 80 forming the intake air passage 82 with respect to the vertical direction, the third silencing chamber 56 is prevented from vertically protruding beyond the carburetor 80 or the protrusion of the third silencing chamber 56 beyond the carburetor 80 is suppressed. Increase in the vertical dimension of the air intake system 40 resulting from the formation of the third silencing chamber 56 can be suppressed.

The first silencing chamber 54, the second silencing chamber 55 and the exit passage 57 are elongate in the second lateral direction, and the third silencing chamber 56 is vertically elongate. Therefore, the vertical dimensions of the first silencing chamber 54, the second silencing chamber 55 and the exit passage 57 are small, and the width along the second lateral direction of the third silencing chamber 56 is small. Consequently, the vertical dimension and the dimension along the second lateral direction of the intake air guide unit 50 are small.

The intake air inlet 52 is surrounded by the cover D, the fan cover 14 and the second silencer S2. Therefore, the leakage of the intake noise through the intake air inlet 52 can be reduced. Since the gap H is below the intake air inlet 52 relative to the air inlet 33 and the gap H is farther from the air inlet 33 than the intake air inlet 52, the leakage of the intake noise through the air inlet 33 from the outboard motor 1 can be reduced.

The protruding part 62b of the top wall 62 of the first silencer S1 suppresses the flow of water, such as splashes of sea water and rain, contained in air flowing through the air inlet 33 into the engine compartment 17 together with air flowing through the gap H toward the intake air inlet 52 into the first silencing chamber 54. The lower part 62a of the top wall 62 overlaps more than half the intake air inlet 52 in a horizontal plane. Therefore, water that has flowed through the intake air inlet 52 impinges on and adheres to the lower part 62a and the flow of the water deep into the first silencing chamber 54 can be suppressed.

The bottom wall 61 of the first silencer S1 and the top wall 68 of the second silencer S2 separating the first silencer S1 and the second silencer S2 from each other are formed so as to intersect the imaginary plane perpendicular to the bottom wall 61 and the top wall 68 or so as to be as near to the imaginary plane as possible, and the intake air inlet 52 and the first intermediate opening 58 are contained in the imaginary plane. Therefore, the first silencing chamber 54 provided with the intake air inlet 52, and the second silencing chamber 55 are disposed close to each other and hence the intake air guide unit 50 has a small vertical dimension.

The bottom wall 73 of the exit passage 57 has the inclined part 73a declining from intake air outlet 53 toward the opening 60 of the third silencing chamber 56. Therefore, water collected on the inclined part 73a flows down along the inclined part 73a into the third silencing chamber 56, and is drained outside through the drain hole 72.

The flame arrester F extends obliquely over the inclined part 73a. Therefore, water that has flowed together with air into the intake air guide passage 51 and adhered to the flame arrester F drips onto the part 73b including the inclined surface 73a, flows down on the inclined part 73a toward the third silencing chamber 56, and is drained outside from the third silencing chamber 56 through the drain hole 72.

The flame arrester F is disposed in the expanded part 57a1 having a large passage area to compensate for a reduction in the passage area of the exit passage 57 by the flame arrester F. Therefore, increase in intake resistance due to the reduction of the passage area is suppressed and the reduction of flow of intake air can be suppressed.

Changes that can be made in the internal combustion engine in the foregoing embodiment will be described.

The internal combustion engine may be a multiple-cylinder internal combustion engine. The air intake system 40 may be provided with an intake pipe connecting the carburetor 80 to the cylinder head 6. The silencing chambers 55 and 56 may be resonance chambers. The predetermined direction may be any direction other than the vertical direction.

In the intake air guide unit 50, the upstream guide unit G1 may be joined to the downstream guide unit G2 by a joining structure capable of joining the upstream guide unit G1 to the downstream guide unit G2 such that the upstream guide unit G1 can be moved outside the working space P by retracting the upstream guide unit G1 from the working space P with the upstream guide unit G1 partly connected to the downstream guide unit G2.

The valve device or the throttle valve device may include a throttle valve and a throttle body. In such a case, a fuel injection valve is used as an air-fuel mixture producing means instead of the carburetor.

The respective bottoms of the third silencer S3 and the third silencing chamber 56 at least partly at the same height position as the body 81 with respect to the vertical direction may be at levels slightly below that of the lower end part 81d of the body 81.

In the intake air guide unit 50, the upstream guide unit G1 and the downstream guide unit G2 may be integrally united together so as to be inseparable. In such a case, the bottom wall 61 and the top wall 68 may be replaced with a single partition wall.

## Claims

1. An internal combustion engine provided with an air intake system (40),
wherein the air intake system (40) comprising:
an intake air guide unit (50) having a silencer (S1) forming a silencing chamber (54);
a valve device (80) including a body (81) connected to the intake air guide unit (50) and having an intake air passage (51) for taking in air that has passed through the intake air guide unit (50), and a valve(83) placed in the air passage (51) to control the flow of intake air; and
an operating mechanism (91, 92) connected to a connecting member (83a) attached to the valve (83) to operate the valve (83), whereby
the silencer (S1) is disposed in a working space (P) for connecting the connecting member (83a) and the operating mechanism (91, 92), and is provided to be set at one of a first position where the silencer (S1) covers the connecting member (83a) with respect to a predetermined direction in which the intake air passage (51), the connecting member (83a) and the silencer (S1) are arranged in that order,
and a second position where the silencer (S1) is outside the working space (P), wherein the silencer (S1) and the silencing chamber (54) form a first silencer(S1) and a first silencing chamber (54), respectively, the first silencing chamber (S1) has an intake air inlet (52) opening into the atmosphere, and the first silencer (S1) forms an upstream guide unit (G1),
**characterized in that** the intake air guide unit (50) includes the upstream guide unit (G1), and a downstream guide unit (G2) having a second silencer (S2) forming a second silencing chamber (55) on a downstream side of the first silencing chamber (54) and connected to the body (81), and the upstream guide unit (G1) is connected to the downstream guide unit (G2) so as to be set at one of the first and the second position.

2. The internal combustion engine according to claim 1, wherein the upstream guide unit (G1) is detachably connected to the downstream guide unit (G2).

3. The internal combustion engine according to claim 1, wherein an exit passage (57) is connected to a downstream end of the second silencing chamber (S2) and to an upstream inlet of the intake passage (51) of the body (81).

4. The internal combustion engine according to claim 3, wherein the exit passage (57), the second silencing chamber (S2) and the first silencing chamber (S1) are arranged one on top of another in that order from a position near the intake passage (51) of the body (81) in a predetermined direction.

5. The internal combustion engine according to claim 1, wherein the body (81) and the first silencing chamber (S1) overlap each other with respect to the predetermined direction.

6. The internal combustion engine according to claim 5, wherein the predetermined direction is a vertical direction, and the first silencing chamber (S1) is above the body (81).

7. The internal combustion engine according to claim 1, wherein the intake air inlet (52) overlaps the body (81) with respect to the predetermined direction and opens toward the body (81).

8. The internal combustion engine according to claim 1, wherein the intake air guide unit (50) is provided with a third silencing chamber (53) communicating with the second silencing chamber (S2).

9. The internal combustion engine according to claim 8, wherein the third silencing chamber (S3) is formed at the same position as the intake air passage (51) with respect to the predetermined direction and branches off from the upstream end of the exit passage (57).

10. The internal combustion engine according to claim 8, wherein the third silencing chamber (S3) is at least partly at the same position as the body (81) with respect to the predetermined direction.

11. The internal combustion engine according to claim 8, wherein the first silencing chamber (S1), the second silencing chamber (S2) and the exit passage (57) are elongate in a direction perpendicular to the predetermined direction, and the third silencing chamber (S3) is elongate in the predetermined direction.

12. The internal combustion engine according to claim 8, wherein the exit passage (57) has a bottom wall (73) declining toward the third silencing chamber (S3).

13. The internal combustion engine according to claim 8, wherein the third silencing chamber (S3) has a drain hole(72).

14. The internal combustion engine according to claim 8, wherein a flame arrester (F) is interposed between the second silencing chamber (S2) and the exit passage(57).

## Patentansprüche

1. Verbrennungsmotor, der mit einem Lufteinlasssystem (40) versehen ist, wobei das Lufteinlasssystem (40) aufweist:
eine Einlassluftführungseinheit (50) mit einem Schalldämpfer (S1), der eine Schalldämpfkammer (54) bildet;
eine Ventilvorrichtung (80), die einen Körper (81) enthält, der mit der Einlassluftführungseinheit (50) verbunden ist und einen Einlassluftkanal (51) aufweist, um Luft aufzunehmen, die durch die Einlassluftführungseinheit (50) hindurchgetreten ist, sowie ein Ventil (83), das in dem Luftkanal (51) angeordnet ist, um die Strömung der Einlassluft zu steuern;
und
einen Betätigungsmechanismus (91, 92), der mit einem am Ventil (83) angebrachten Verbindungselement (83a) verbunden ist, um das Ventil (83) zu betätigen,
wobei der Schalldämpfer (S1) in einem Arbeitsraum (P) zum Verbinden des Verbindungselements (83a) und des Betätigungsmechanismus (91, 92) angeordnet ist und vorgesehen ist, um in eine erste Position gestellt zu werden, wo der Schalldämpfer (S1) das Verbindungselement (83a) abdeckt, im Bezug auf eine vorbestimmte Richtung, in der der Einlassluftkanal (51), das Verbindungselement (83a) und der Schalldämpfer (S1) in dieser Reihenfolge angeordnet sind, oder eine zweite Position, wo der Schalldämpfer (S1) außerhalb des Arbeitsraums (P) ist, wobei der Schalldämpfer (S1) und die Schalldämpfkammer (54) jeweils einen ersten Schalldämpfer (S1) und eine erste Schalldämpfkammer (54) bilden, wobei die erste Schalldämpfkammer (S1) einen Einlasslufteinlass (52) aufweist, der sich in die Atmosphäre öffnet, und der erste Schalldämpfer (S1) eine stromaufwärtige Führungseinheit (G1) bildet, **dadurch gekennzeichnet, dass** die Einlassluftführungseinheit (50) die stromaufwärtige Führungseinheit (G1) enthält, sowie eine stromabwärtige Führungseinheit (G2) mit einem zweiten Schalldämpfer (S2), der eine zweite Schalldämpfkammer (55) an der stromabwärtigen Seite der ersten Schalldämpfkammer (54) bildet und mit dem Körper (81) verbunden ist, und die stromaufwärtige Führungseinheit (G1) mit der stromabwärtigen Führungseinheit (G2) so verbunden ist, so dass sie in die erste oder zweite Position zu stellen ist.

2. Verbrennungsmotor nach Anspruch 1, wobei die stromaufwärtige Führungseinheit (G1) mit der stromabwärtigen Führungseinheit (G2) lösbar verbunden ist.

3. Der Verbrennungsmotor nach Anspruch 1, wobei ein Ausgangskanal (57) mit einem stromabwärtigen Ende der zweiten Schalldämpfkammer (S2) und mit einem stromaufwärtigen Einlass des Einlasskanals (51) des Körpers (81) verbunden ist.

4. Der Verbrennungsmotor nach Anspruch 3, wobei der Ausgangskanal (57), die zweite Schalldämpfkammer (S2) und die erste Schalldämpfkammer (S1) in dieser Reihenfolge von einer Position nahe dem Einlasskanal (51) des Körpers (81) in einer vorbestimmten Richtung aufeinander angeordnet sind.

5. Der Verbrennungsmotor nach Anspruch 1, wobei der Körper (81) und die erste Schalldämpfkammer (S1) in Bezug auf die vorbestimmte Richtung einander überlappen.

6. Der Verbrennungsmotor nach Anspruch 5, wobei die vorbestimmte Richtung eine vertikale Richtung ist, und die erste Schalldämpfkammer (S1) oberhalb des Körpers (81) ist.

7. Der Verbrennungsmotor nach Anspruch 1, wobei der Einlasslufteinlass (52) den Körper (81) in Bezug auf die vorbestimmte Richtung überlappt und sich zum Körper (81) öffnet.

8. Der Verbrennungsmotor nach Anspruch 1, wobei die Einlassluftführungseinheit (50) mit einer dritten Schalldämpfkammer (53) versehen ist, die mit der zweiten Schalldämpfkammer (S2) in Verbindung steht.

9. Der Verbrennungsmotor nach Anspruch 8, wobei die dritte Schalldämpfkammer (S3) in Bezug auf die vorbestimmte Richtung an der gleichen Position wie der Einlassluftkanal (51) ausgebildet ist und vom stromaufwärtigen Ende des Ausgangskanals (57) abzweigt.

10. Der Verbrennungsmotor nach Anspruch 8, wobei die dritte Schalldämpfkammer (S3) in Bezug auf die vorbestimmte Richtung zumindest teilweise an der gleichen Position wie der Körper (81) ist.

11. Der Verbrennungsmotor nach Anspruch 8, wobei die erste Schalldämpfkammer (S1), die zweite Schalldämpfkammer (S2) und der Ausgangskanal (57) in Richtung senkrecht zur vorbestimmten Richtung länglich sind, und die dritte Schalldämpfkammer (S3) in der vorbestimmten Richtung länglich ist.

12. Der Verbrennungsmotor nach Anspruch 8, wobei der Ausgangskanal (57) eine Bodenwand (73) aufweist, die zur dritten Schalldämpfkammer (S3) hin abgesenkt ist.

13. Der Verbrennungsmotor nach Anspruch 8, wobei die dritte Schalldämpfkammer (S3) ein Ablaufloch (72) aufweist.

14. Der Verbrennungsmotor nach Anspruch 8, wobei eine Flammensperre (F) zwischen der zweiten Schalldämpfkammer (S2) und dem Ausgangskanal (57) angeordnet ist.

## Revendications

1. Moteur à combustion interne pourvu d'un système d'admission d'air (40), dans lequel le système d'admission d'air (40) comprend :
une unité de guidage d'air d'admission (50) ayant un silencieux (S1) formant une chambre d'insonorisation (54) ;
un dispositif de soupape (80) incluant un corps (81) raccordé à l'unité de guidage d'air d'admission (50) et ayant un passage d'air d'admission (51) pour faire entrer l'air qui est passé à travers l'unité de guidage d'air d'admission (50), et une soupape (83) placée dans le passage d'air (51) pour réguler le flux d'air d'admission ; et
un mécanisme d'actionnement (91, 92) raccordé à un organe de raccordement (83a) fixé à la soupape (83) pour actionner la soupape (83), moyennant quoi le silencieux (S1) est disposé dans un espace de travail (P) pour raccorder l'organe de raccordement (83a) et le mécanisme d'actionnement (91, 92), et est prévu pour être installé en l'une d'une première position où le silencieux (S1) couvre l'organe de raccordement (83a) par rapport à une direction prédéterminée dans laquelle le passage d'air d'admission (51), l'organe de raccordement (83a) et le silencieux (S1) sont agencés dans cet ordre, et une seconde position où le silencieux (S1) est en dehors de l'espace de travail (P), dans lequel le silencieux (S1) et la chambre d'insonorisation (54) forment un premier silencieux (S1) et une première chambre d'insonorisation (54), respectivement, la première chambre d'insonorisation (S1) a une entrée d'air d'admission (52) débouchant dans l'atmosphère, et le premier silencieux (S1) forme une unité de guidage amont (G1), **caractérisé en ce que** l'unité de guidage d'air d'admission (50) inclut l'unité de guidage amont (G1), et une unité de guidage aval (G2) ayant un second silencieux (S2) formant une deuxième chambre d'insonorisation (55) sur un côté aval de la première chambre d'insonorisation (54) et raccordé au corps (81), et l'unité de guidage amont (G1) est raccordée à l'unité de guidage aval (G2) de façon à être installée en l'une de la première et de la seconde position.

2. Moteur à combustion interne selon la revendication 1, dans lequel l'unité de guidage amont (G1) est raccordée de façon détachable à l'unité de guidage aval (G2).

3. Moteur à combustion interne selon la revendication 1, dans lequel un passage de sortie (57) est raccordé à une extrémité aval de la deuxième chambre d'insonorisation (S2) et à une entrée amont du passage d'admission (51) du corps (81).

4. Moteur à combustion interne selon la revendication 3, dans lequel le passage de sortie (57), la deuxième chambre d'insonorisation (S2) et la première chambre d'insonorisation (S1) sont agencés les uns par-dessus les autres dans cet ordre depuis une position près du passage d'admission (51) du corps (81) dans une direction prédéterminée.

5. Moteur à combustion interne selon la revendication 1, dans lequel le corps (81) et la première chambre d'insonorisation (S1) se chevauchent l'un l'autre par rapport à la direction prédéterminée.

6. Moteur à combustion interne selon la revendication 5, dans lequel la direction prédéterminée est une direction verticale, et la première chambre d'insonorisation (S1) est au-dessus du corps (81).

7. Moteur à combustion interne selon la revendication 1, dans lequel l'entrée d'air d'admission (52) chevauche le corps (81) par rapport à la direction prédéterminée et s'ouvre vers le corps (81).

8. Moteur à combustion interne selon la revendication 1, dans lequel l'unité de guidage d'air d'admission (50) est pourvue d'une troisième chambre d'insonorisation (53) communiquant avec la deuxième chambre d'insonorisation (S2).

9. Moteur à combustion interne selon la revendication 8, dans lequel la troisième chambre d'insonorisation (S3) est formée en la même position que le passage d'air d'admission (51) par rapport à la direction prédéterminée et bifurque depuis l'extrémité amont du passage de sortie (57).

10. Moteur à combustion interne selon la revendication 8, dans lequel la troisième chambre d'insonorisation (S3) est au moins en partie en la même position que le corps (81) par rapport à la direction prédéterminée.

11. Moteur à combustion interne selon la revendication 8, dans lequel la première chambre d'insonorisation (S1), la deuxième chambre d'insonorisation (S2) et le passage de sortie (57) sont allongés dans une direction perpendiculaire à la direction prédéterminée, et la troisième chambre d'insonorisation (S3) est allongée dans la direction prédéterminée.

12. Moteur à combustion interne selon la revendication 8, dans lequel le passage de sortie (57) a une paroi de fond (73) déclinant vers la troisième chambre d'insonorisation (S3).

13. Moteur à combustion interne selon la revendication 8, dans lequel la troisième chambre d'insonorisation (S3) a un orifice de vidange (72).

14. Moteur à combustion interne selon la revendication 8, dans lequel un arrête-flamme (F) est intercalé entre la deuxième chambre d'insonorisation (S2) et le passage de sortie (57).
